# EUROPÄISCHE PATENTANMELDUNG

(11) **EP 1 568 302 A1**
(43) Veröffentlichungstag der Anmeldung: **31.08.2005**
(21) Anmeldenummer: 05101032.0
(22) Anmeldetag: 11.02.2005
(51) Int. Cl.: A47J 36/38, F24C 15/20, B01D 45/08, A47J 37/12

(54) **Frittiergerät**

(30) Priorität: 26.02.2004 ES 200400528
(71) Anmelder: BSH Bosch und Siemens Hausgeräte GmbH, 81739 München (DE)
(72) Erfinder: Klemm, Jochen, 31180 Zizur Mayor (ES)

(57) **Zusammenfassung**

Es wird ein Frittiergerät (1), insbesondere eine Haushalsfriteuse, mit einem verbesserten Abluftfilter beschrieben. Der Abluftfilter enthält erfindungsgemäß einen Labyrinthfilter (5).

## Beschreibung

Die Erfindung bezieht sich auf ein Frittiergerät, insbesondere eine Haushaltsfriteuse, der im Oberbegriff von Anspruch 1 erläuterten Art.

Haushaltsfriteusen sind überwiegend mit einem Abluftfilter versehen, der bevorzugt im Deckel untergebracht ist, und der dazu dient, die beim Frittieren entstehenden Dämpfe möglichst vollständig von mitgerissenen Öltröpfchen zu befreien, um die Geruchsbelästigung durch den Frittiervorgang so weit wie möglich zu verringern. Bisher wurden zu diesem Zweck Lagen aus Streckmetall eingesetzt, die vor einer nach außen führenden Öffnung, bevorzugt im Deckel des Frittiergeräts, angeordnet wurden. Streckmetall ist jedoch einerseits schwierig zu reinigen. Andererseits lässt die Abscheidewirkung für Öltröpfchen dieser Streckmetallbleche zu wünschen übrig. Man hat bereits versucht, die Abscheidewirkung zu verbessern, indem mehrere Lagen dieses Streckmetalls verwendet wurden, daraus ergibt sich jedoch das Problem, dass außer dem Öl auch vermehrt Wasserdampf abgeschieden wird und zurück in das heiße Öl tropft, was weitere Probleme verursacht.

Der Erfindung liegt die Aufgabe zugrunde, ein Frittiergerät mit einem verbesserten Abluftfilter bereitzustellen.

Die Aufgabe wird durch die im Anspruch 1 angegebenen Merkmale gelöst.

Der Einsatz eines Labyrinthfilters bei Frittiergeräten hat überraschenderweise ergeben, dass damit eine sehr gute Abscheidwirkung erreicht werden kann. Labyrinthfilter mit ihren gegenüber dem Streckmetall in glatteren Wänden lassen sich besser reinigen und eignen sich auch besser dazu, die abgeschiedenen Flüssigkeiten abzuführen.

Zwar sind Labyrinthfilter, beispielsweise für Abluftfilter in Großküchen oder in Dunstabzugshauben bereits eingesetzt worden (s. auch DE-A-44 27 074, DE-C-27 20 201, EP-A-206 204), jedoch nur in Verbindung mit einem Sauggebläse. Sauggebläse sind jedoch für Frittiergeräte, insbesondere für Haushaltsfriteusen, nicht einsetzbar. Es hat sich überraschenderweise gezeigt, dass ein Labyrinthfilter auch ohne Sauggebläse wirksam ist und sich darüber hinaus besonders für die erfindungsgemäße Verwendung in einem Frittiergerät, insbesondere einer Haushaltsfriteuse eignet, da er zwar für eine sehr gute Abscheidung der größeren und demzufolge relativ schwereren Öltröpfchen durch Zentrifugalkraft infolge einer Strömungsverwirbelung sorgt, Wasserdampf durch die offene Struktur aber eher durchlässt, so dass ein Zurücktropfen von Kondensatwasser in das heiße Öl weniger zu befürchten ist, wobei jedoch auch der Dampf abgekühlt wird.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine schematische, perspektivischer Darstellung eines erfindungsgemäßen Frittiergeräts,
- Fig. 2: den Schnitt II-II aus Fig. 1, und
- Fig. 3: den Schnitt III-III aus Fig. 2.

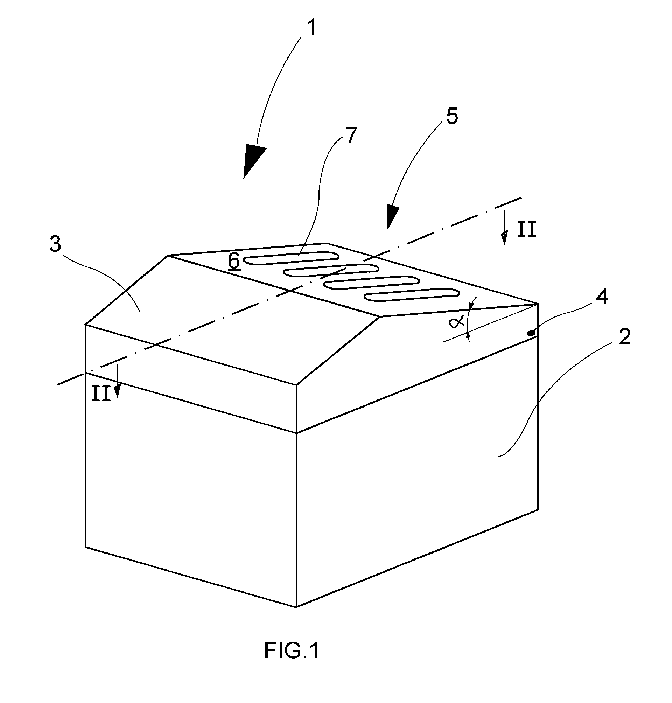

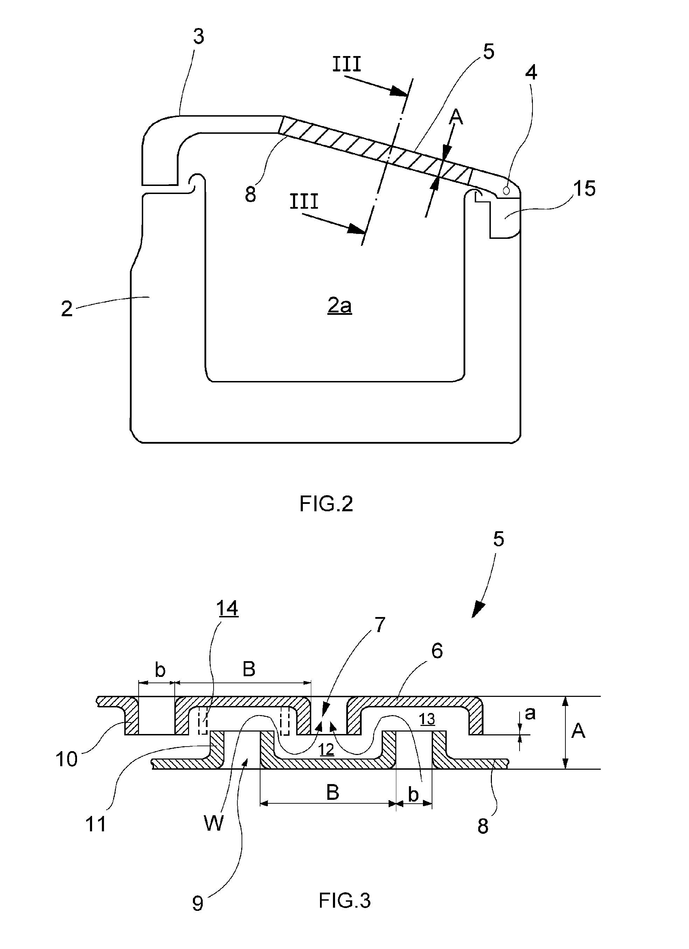

Fig. 1 zeigt in schematischer, perspektivischer Darstellung ein Frittiergerät 1, das im dargestellten Ausführungsbeispiel als Hauhaltsfriteuse ausgebildet ist. Das Frittiergerät 1 enthält, wie auch in Verbindung mit Fig. 2 ersichtlich, einen üblichen dickwandigen, isolierten Behälter 2, dessen Innenraum 2a als Frittierraum ausgebildet ist, also beispielsweise einen Frittierkorb und das Ölbad aufnimmt. Im Behälter 2 ist weiterhin die übliche Heizeinrichtung und Temperatursteuereinrichtungen dafür untergebracht.

Der Behälter 2 wird durch einen Deckel 3 verschlossen, der mit dem Behälter 2 über ein Scharniergelenk 4 schwenkbar verbunden ist. Auch der Deckel enthält die übliche Ausbildung mit Verriegelung und Isolierung.

Der Deckel 3 ist mit einer Filtereinrichtung in Form eines Labyrinthfilters 5 versehen. Der Labyrinthfilter 5 bedeckt nur einen Teil des Deckels 3 und ist bevorzugt in der Nähe des Gelenks 4 vorgesehen. Im dargestellten Ausführungsbeispiel erscheint der Labyrinthfilter 5 an der Oberseite des Deckels 3 und enthält einen ersten Träger in Form einer Abdeckplatte 6, die gleichzeitig die obere Begrenzung des Deckels 3 bildet. Die Abdeckplatte 6 ist im dargestellten Ausführungsbeispiel unter einem Winkel gegenüber der Horizontalen und in Richtung auf das Gelenk 4 geneigt. Die Abdeckplatte 6 ist mit einer Reihe paralleler, sich in Neigungsrichtung von oben nach unten erstreckender, nach außen offener Langlöcher 7 versehen.

Das Innere des Deckels 3, zumindest im Bereich des Labyrinthfilters 5, wird durch einen weiteren Träger 8 gebildet. Der weitere Träger 8 kann als Teil einer Reflektorplatte ausgebildet sein, die bei Friteusen üblich sind und zur Wärmereflexion zurück in das Inneren 2a des Behälters 2 dienen, um das Aufheizen des Deckels 3 zu verringern. Zumindest im Bereich der Labyrinthdichtung 5 verlaufen die beiden Träger 6 und 8 parallel zueinander und in einem einen Zwischenraum bildenden Abstand A. Die beiden Träger 6, 8 können zum Reinigen demontiert werden und bestehen bevorzugt aus einem wärmeleitenden Material, insbesondere Metallblech.

Wie auch in Verbindung mit Fig. 3 ersichtlich, ist auch der zweite Träger 8, die Reflektorplatte, mit einer Reihe paralleler Durchtrittsöffnungen 9 in Form von Langlöchern versehen. Die Langlöcher 9 erstrecken sich ebenfalls in Richtung der Neigung um den Winkel von oben nach unten und sind gegenüber den Langlöchern 7 in der Abdeckplatte 6 versetzt. Die Breite b beider Langlöcher 7, 9 quer zur Neigung ist kleiner als die Breite B der sich zwischen den Langlöchern befindenden, ungelochten Bereiche, wobei sich ein Langloch 7 bevorzugt in der Mitte zwischen zwei Langlöchern 9 und umgedreht befindet.

Die Durchtrittsöffnungen 7, 9 sind an den einander zugewandten Begrenzungsseiten mit Stegen 10 bzw. 11 versehen, die in den Zwischenraum A zwischen den beiden Trägern 6, 8 ragen und bevorzugt eine Länge aufweisen, dass sie sich nicht oder nur um einen gegenüber dem Abstand A kleinen Abstand a überlappen. Gegenüber den Stegen 10 und den Durchgangsöffnungen 7 der Abdeckplatte 6 bilden sich somit in der Reflektorplatte 8 Ablaufrinnen 12, die in Richtung auf das Gelenk 4 abfallen. Weiterhin bilden sich somit zwischen den Langlöchern 9 und den Langlöchern 7 Strömungskanäle 13 aus, die für eine verwirbelte Wrasenströmung entlang des Pfeiles W sorgen.

Die Abmessungen b, B, a und A werden auf die zu erwartende Abluftströmung so eingestellt, dass eine möglichst langsame Durchströmung des Labyrinthfilters 5 erfolgt, so dass einerseits die mitgerissenen Öltröpfchen abgeschieden werden können und andererseits die Abluft an den Flächen der Reflektorplatte und/oder der Abdeckplatte abkühlt, so dass auch der Dampf und die Geruchsstoffe teilweise kondensieren.

Eine weitere Maßnahme zum Erzeugen der gewünschten Strömung liegt darin, zusätzliche Stege 14 vorzusehen, die den Strömungskanal 13 bereichsweise verengen und somit die Strömung verlangsamen. Solche zusätzlichen Stege 14 weisen etwa die Form der Stege 10 auf und sind bevorzugt an der Abdeckplatte 6 vorgesehen, können jedoch auch an der Reflektorplatte 8 vorgesehen sein. Die zusätzlichen Stege 14 können im gesamten Bereich des Labyrinthfilters vorgesehen sein, bevorzugt befinden sie sich jedoch im Mittelbereich des Deckels, da dort die Wrasenströmung am stärksten ist. Durch die zusätzlichen Stege 14 wird die Strömungsgeschwindigkeit weiter herabgesetzt, so dass die austretende Wrasenströmung W länger in Kontakt mit den wärmeleitenden Bereichen des Labyrinthfilters 5 steht und stärker abkühlt. Dadurch wird auch die Gefahr von Verbrennungen durch austretenden, heißen Wrasen vermindert.

Bevorzugt verringern die zusätzlichen Stege 14 den Strömungsquerschnitt im Durchströmungskanal 13 um die Hälfte.

Sowohl die Stege 10 als auch die Stege 14 der Abdeckplatte 6 liegen oberhalb der Ablaufrinnen 12. Das abgeschiedene Kondensat und die Öltröpfchen gelangen somit in überwiegendem Maße in die Ablaufrinnen 12, wobei die Ablaufrinnen 12 am tiefsten Punkt in der Nähe des Gelenks 4 in eine Sammelwanne 15 münden, die entweder durch eine eigene Ablaufleitung nach außen entleert werden kann oder auf andere Weise leicht zu reinigen ist.

In Abwandlung der beschriebenen und gezeichneten Ausführungsbeispiele kann der Labyrinthfilter auch an anderen Stellen der Friteuse angeordnet sein. Ist der Labyrinthfilter geneigt angeordnet, so reicht es aus, nur den unteren Träger zu neigen. Die Durchtrittsöffnungen, insbesondere im oberen Träger, der keine Ablaufrinnen braucht, müssen nicht unbedingt als Langlöcher ausgebildet sein, sondern es kann beispielsweise ein Labyrinthfilter eingesetzt werden, der in üblicher Weise durch ineinandergreifende Profile, mit geradlinigen Spalten dazwischen, aufgebaut ist. Unter Umständen müssen Stege nur von einem der Träger in Richtung auf den anderen Träger vorstehen, wenn die dadurch bewirkte Verlangsamung und Verwirbelung der Wrasenströmung ausreicht. Die Stege können sich jedoch auch stärker als dies im dargestellten Ausführungsbeispiel gezeichnet überlappen. Der Labyrinthfilter kann jedoch auch mit seinem oberen und unteren Träger getrennt von der Friteuse hergestellt werden, und zusätzlich zu einer in üblicher Weise ausgebildeten, mit Durchströmöffnungen versehenen Reflektorplatte vorgesehen werden. Es ist weiterhin möglich, den Labyrinthfilter mit anderen Filtertypen zu kombinieren.

## Patentansprüche

1. Frittiergerät (1), insbesondere Haushaltsfriteuse, mit einem Garraum (2a) für ein Frittiergut und einem Abluftfilter, durch den ein Wrasen vom Garraum (2a) aus dem Frittiergerät strömt, **dadurch gekennzeichnet, dass** der Abluftfilter einen Labyrinthfilter (5) enthält.

2. Frittiergerät nach Anspruch 1, **dadurch gekennzeichnet, dass** der Labyrinthfilter (5) einen ersten und einen zweiten Träger (6, 8) enthält, die im Abstand (A) zueinander angeordnet und mit Durchlassöffnungen (7, 9) versehen sind.

3. Frittiergerät nach Anspruch 1 oder 2, **dadurch gekennzeichnet, dass** von wenigstens einem der Träger (8, 6) im Abstand zueinander angeordnete Stege (10, 11) in Richtung auf den anderen Träger (6, 8) vorstehen.

4. Frittiergerät nach Anspruch 2 oder 3, **dadurch gekennzeichnet, dass** der erste und der zweite Träger (6, 8) einen Durchlasskanal (13) bilden.

5. Frittiergerät nach einem der Ansprüche 2 bis 4, **dadurch gekennzeichnet, dass** von beiden Trägern (6, 8) im Abstand (B) zueinander angeordnete Stege (10, 11) vorstehen, zwischen denen ein Zwischenraum als Durchlasskanal (13) ausgebildet ist.

6. Frittiergerät nach Anspruch 5, **dadurch gekennzeichnet, dass** der den Durchlasskanal (13) bildende Abstand (B) zwischen den Stegen (10, 11) in vorbestimmten Bereichen des Labyrinthfilters (5) verengt ist.

7. Frittiergerät nach Anspruch 6, **dadurch gekennzeichnet, dass** in den vorbestimmten Bereichen zusätzliche Stege (14) zum Verengen des Durchlasskanals (13) vorgesehen sind.

8. Frittiergerät nach einem der Ansprüche 2 bis 7, **dadurch gekennzeichnet, dass** der erste und der zweite Träger (6, 8) voneinander trennbar sind.

9. Frittiergerät nach einem der Ansprüche 2 bis 8, **dadurch gekennzeichnet, dass** wenigstens ein Träger (6, 8) als Platte ausgebildet ist.

10. Frittiergerät nach einem der Ansprüche 3 bis 9, **dadurch gekennzeichnet, dass** die Stege (10, 11) durch aufgebogene Randkanten der im Träger (6, 8) vorgesehenen Durchlassöffnungen (7, 9) gebildet sind.

11. Frittiergerät nach einem der Ansprüche 2 bis 10, **dadurch gekennzeichnet, dass** die Durchlassöffnungen (7, 9) im Träger (6, 8) als Langlöcher ausgebildet sind.

12. Frittiergerät nach einem der Ansprüche 1 bis 11, **dadurch gekennzeichnet, dass** der Labyrinthfilter (5) in einem Winkel (∝) zur Horizontalen angeordnet und ein Bereich zwischen den Stegen (11) als Ablaufrinne (12) ausgebildet ist.

13. Frittiergerät nach Anspruch 12, **dadurch gekennzeichnet, dass** am tiefsten Punkt des Labyrinthfilters (5) eine Sammelwanne (15) vorgesehen ist.

14. Frittiergerät nach einem der Ansprüche 1 bis 13, **dadurch gekennzeichnet, dass** der Labyrinthfilter (5) in einem Deckel (3) zum Schließen des Garraums (2a) angeordnet ist.

15. Frittiergerät nach einem der Ansprüche 2 bis 14, **dadurch gekennzeichnet, dass** der erste und der zweite Träger (6, 8) jeweils eine nach außen weisende Abdeckplatte (6) und eine nach innen weisende Reflektorplatte (8) enthält.
